# EUROPEAN PATENT SPECIFICATION

(11) **EP 2 173 654 B1**
(45) Date of publication and mention of the grant of the patent: **08.05.2013**
(21) Application number: 08772593.3
(22) Date of filing: 16.06.2008
(51) Int. Cl.: B67D 7/74, B67D 7/78, B60S 5/02, B67D 7/04

(54) **FUEL DISPENSING**
BRENNSTOFFABGABE
DISTRIBUTION DE CARBURANTS

(30) Priority: 14.06.2007 AU 2007903191 P
(43) Date of publication of application: 14.04.2010
(73) Proprietor: Mitropoulos, Nickolaos, Thomastown, VIC 3074 (AU)
(72) Inventor: MITROPOULOS, Nickolaos, Thomastown, Victoria 3074 (AU)
(74) Representative: Kay, Ross Marcel
(86) International application number: PCT/AU2008/000847
(87) International publication number: WO 2008/151375

(56) References cited:
- WO-A2-02/068296
- GB-A- 2 333 508
- US-A- 3 308 845
- US-A- 3 383 190
- US-A- 3 383 190
- US-A- 4 673 296
- US-A- 4 988 020
- US-A- 5 203 384
- US-A- 5 249 612
- US-A- 5 275 189
- US-A- 5 400 924
- US-A- 5 865 346
- US-A1- 2005 055 874
- US-A1- 2006 237 092

## Description

### FIELD OF THE INVENTION

This invention relates to a method and apparatus for fuel dispensing together with ancillary actions. It is particularly related to dispensing blended fuels but is not limited to such.

### BACKGROUND

Service stations that sell petrol (or gasoline) are widespread throughout each country and fundamentally comprise inground tanks of each separately required fuel or mixture of fuel connected directly to each separate required bowser. An aboveground fueling station with vertical tanks is disclosed in US 2006/0237092 A1.

However due to the increase in oil prices the cost of petrol has dramatically increased and other options are being considered. Apart from diesel there are other fundamental choices of fuel including biodiesel and other biofuels which are sourced from replaceable organically grown product rather than from irreplaceable oil reserves.

Since there are variations in the science or marketing or simply acceptance of the use of biofuels, the consumer generally uses different combinations depending on the knowledge or acceptance of the user. The environmental sensitivity of the location of use can also affect the required different ratios of mixtures of biofuels to normal fuels that will be used.

In the present fuel dispensing systems at petrol stations and service stations such variations are not really available and therefore the choice to the consumer is dramatically limited to the chosen fuels or mixtures provided by the supplier. In this market of consumer choice and individual decisions on how to be more environmentally considerate, this limitation is not acceptable.

It is therefore an object of the invention to provide a system and means that facilitates provision of choice of mixtures of fuels to the consumer.

### SUMMARY OF THE INVENTION

In accordance with the invention there is provided a removable dispensing station for dispensing multiple fuels such that a station can be readily located at a required site but if for commercial or other reasons can be readily moved to a different location without the need for substantial excavation and rebuilding and decontamination of soil as required with usual petrol stations or service stations. The dispensing station of the invention including a) a plurality of stand alone tanks each for containing a fuel; b) a first protection means surrounding each of the plurality of tanks; c) a second protection means for at least circumferentially surrounding the first protection means and d) a third protection means for circumferentially surrounding the second protection means wherein the second protection means is an assembly with detachably connecting parts that forms a frame structure for locating and supporting the first and third protection means to form a demountable and removable multiwall barrier for protecting the fuel tanks and safeguarding the users from accidental explosions.

The mixing chamber can include a positive displacement means for displacing the combined fuels to the dispensing means.

The mixing chamber can have a predetermined volume that is greater than expected maximum tank delivery in a single dispensing occurrence.

The mixing means can include a flow means for causing homogenising of the combined fuels.

The flow means can be static and rely on the effected flow to cause the homogenising of the combined fuels.

The dispensing means can include a pump for pumping the homogenised combined fuels to a vehicle tank.

The pump of the dispensing means can coordinate with the positive displacement means of the mixing chamber to provide the dispensing.

The control of the dispensing can be provided by the dispensing means including an activation means at the nozzle that must engage the tank opening of the vehicle to begin dispensing.

The tanks can be vented vertically so as to provide a directional access and explosion or combustion directional release.

The first protection means are solid mass blocks which can be orientated and locked into position by the second protection means. The third protection means performs a dual function such as vending machines and are mounted to the second protection means on an outer side.

The removable dispensing station can perform its function also by the plurality of tanks each for containing a fuel being connected to a fuel dispensing means whereby the removable dispensing station can dispense a plurality of fuels or fuel mixtures greater than the number of fuel tanks.

Therefore it can be seen that the invention provides a novel method of fuel dispensing by providing a removable structure including a first plurality of above ground standalone tanks that allows for storage of a first plurality of different fuels and a multiwall barrier for protecting the first plurality of above ground standalone tanks wherein at least one of the wall barriers of the multiwall barrier provides a dismountable supporting means for at least one other of the wall barriers. In this way the location of the dispensing station is readily movable but when constructed in this novel way provides a safe and acceptable multifunctional fuel dispensing station that meets all the safety requirements and can be readily controlled in operation remotely.

Further it provides a fuel dispensing means that dispenses a batch of at least two fuels blended on site and including metering means including batch receiving tank for metering two separate fuels for combination in a mixing chamber which substantially homogenises the combined fuels and a dispensing means for dispensing the substantially homogenised combined fuels wherein the plurality of fuels provided or mixtures provided is greater than the number of plurality of tanks provided. In this way the sizing of the dispensing station can be retained at reasonable size that will therefore also allow ready deinstallation and reinstalllation at new location. Further it allows fuel dispensing station to be located at otherwise impossibly small locations if a plurality of fuels or blended fuels are required. This even extends to use on platforms or barges. Even more importantly it allows the consumer to have choice.

### BRIEF DESCRIPTION OF THE DRAWINGS

In order that the invention is more readily understood an embodiment will be described by way of illustration only with reference to the drawings wherein:
Figure 1 is a diagrammatic perspective view of a fuel dispensing station in accordance with an embodiment of the invention;
Figure 2 is an overhead plan view of the fuel dispensing station of figure 1;
Figure 3 is the overhead plan view of the second embodiment of a fuel dispensing station in accordance with the invention;
Figure 4 is an overhead plan view of a third embodiment of a fuel dispensing station in accordance with invention;
Figure 5 is an overhead plan view of a fourth embodiment of a fuel dispensing station in accordance with invention in which it is mounted on a platform for dispensing fuels to boats on the water;
Figure 6 is a diagrammatic view of a means for utilising a method of fuel dispensing of a plurality of fuels in accordance with the invention.

### EMBODIMENT OF THE INVENTION

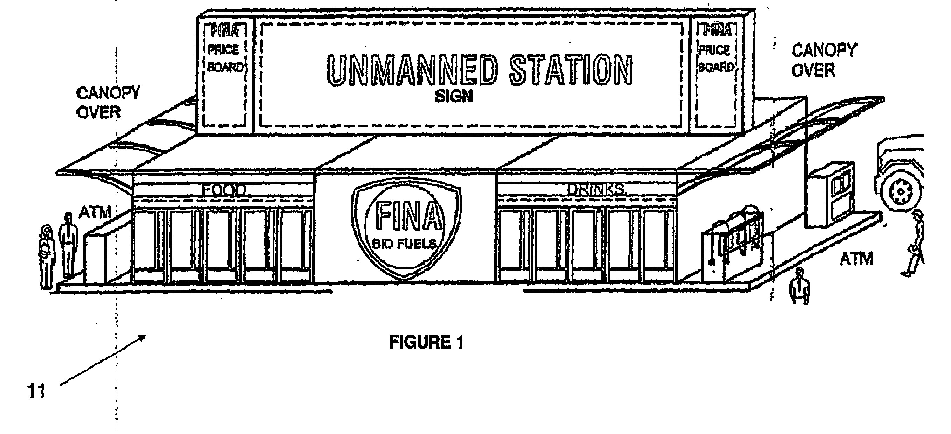

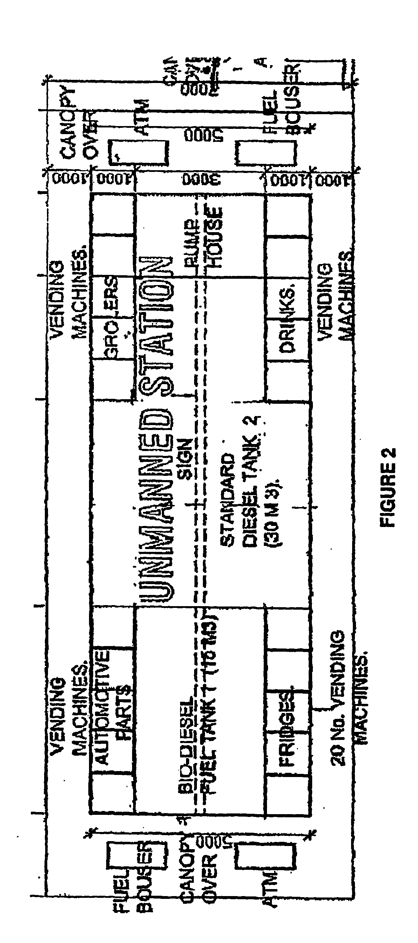

Referring to the drawings in Figure 1 and 2, there is shown a fuel dispensing station 11 in accordance with the invention that is to be unmanned. To undertake this action, to meet the safety requirements, to supply a range of different choices of fuel or mixtures of fuels, and to meet the metering requirements for tax excise, a number of problems needed to be overcome. Further, to provide a dispensing station that can be readily packed up and moved to a new location due to commercial reasons without the costs and troubles in excavation and removal of inground tanks and the months of gas retrieval and soil reclamation for removing contaminated soil from oil leaks also required a new approach.

The dispensing station 11 includes a plurality of bowsers for dispensing one of a plurality of different fuels, wherein at least one of the bowsers includes a method of fuel dispensing a metered mixture of two fuels. Generally fuels can include the following:
i. petrol (gasoline)
ii. ethanol or other biofuel
iii. diesel
iv. biodiesel
v. any combination of petrol and ethanol but usually 5% ethanol and 10% ethanol
vi. any combination of diesel and biodiesel but usually 5% biodiesel, 10% biodiesel, 100% biodiesel.

The method provides metering means for metering two separate fuels for combination in a mixing chamber, a mixing means for substantially homogenising the combined fuels and a dispensing means for dispensing the homogenised combined fuels.

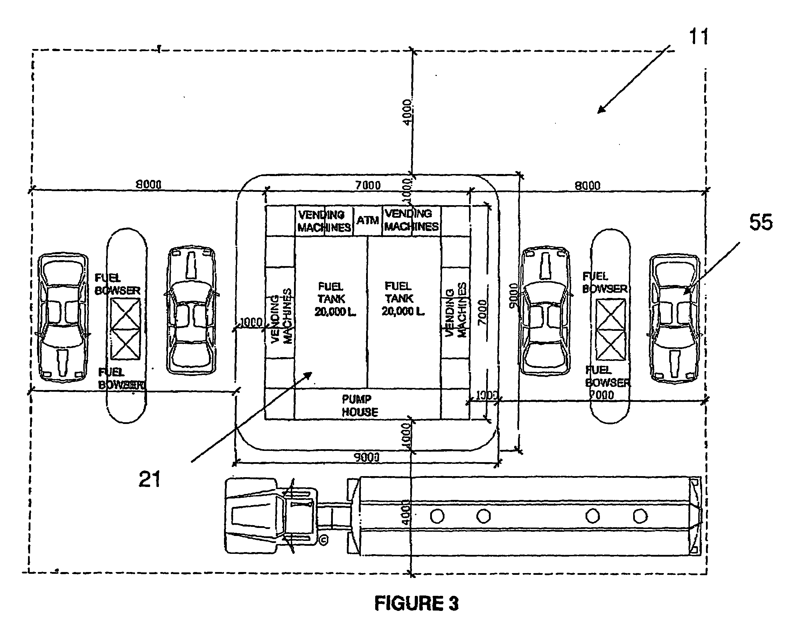

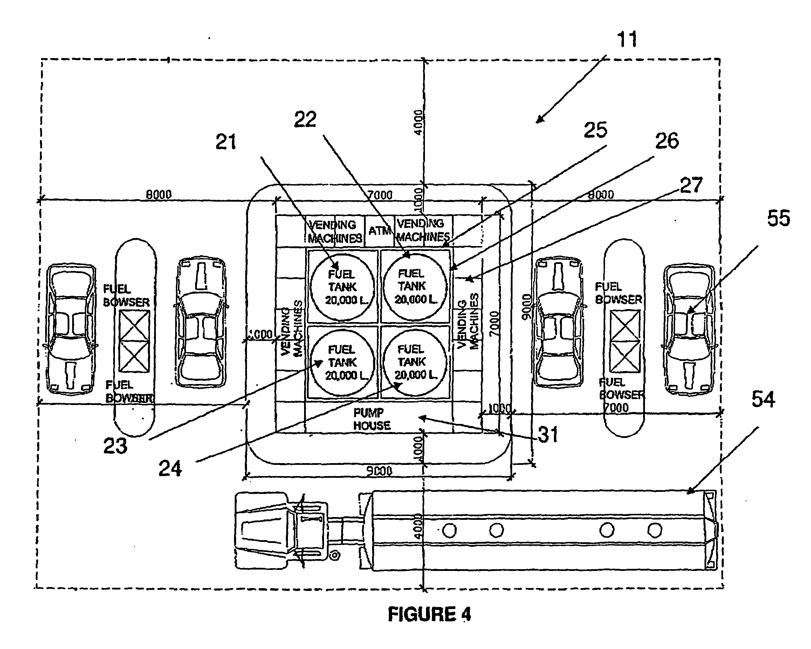

With regard to Figures 3 and 4 there is shown a dispensing station for dispensing fuel. This can be a removable dispensing station with ability for dispensing multiple fuels. A plurality of stand alone tanks 21, 22, 23, 24 each for containing a fuel are located in a central position with a first protection means surrounding each of the plurality of tanks. This first protection means 25 is generally a solid, mass structure in the form of prefabricated blocks such as reinforced concrete that can be stacked and secured around each fuel tank. Due to this first circumferential means around each tank then the tanks containing flammable liquids 21, 22 including petrol or ethanol can be stored adjacent the tanks 23, 24 containing combustible liquids including diesel and biodiesel.

A second protection means 26 is in the form of steel for at least circumferentially surrounding the first protection means 25 and with detachably connecting parts that forms a frame structure for locating and supporting the first protection means.

A third protection means 27 which includes a bank of articles that perform a secondary function such as vending machines, Automatic Teller Machine (ATM) and pump house circumferentially surrounds the second protection means and are fixed thereto to locate this bank of articles. However the third protection means adds another layer of safety protection.

By the interconnection there is formed a demountable and removable multiwall barrier 25, 26, 27 for protecting the fuel tanks 21, 22, 23, 24 and safeguarding the users from accidental explosions. The tanks are vented vertically but have security access restricting coverage and any signage as required.

However to allow the ready dispensing the removable dispensing station can minimise the number of the plurality of tanks each for containing a fuel by making use of the fuel dispensing means whereby the removable dispensing station can dispense a plurality of fuels or fuel mixtures greater than the number of fuel tanks.

Referring to Figure 4 there is shown a fuel dispensing system including a plurality of tanks for connection to a plurality of bowsers wherein the plurality of tanks are connected to a dispensing system providing a method of fuel dispensing of at least two fuels including providing metering means for metering two separate fuels for combination in a mixing chamber which substantially homogenises the combined fuels and a dispensing means for dispensing the homogenised combined fuels; wherein the plurality of fuels provided or mixtures provided is greater than the number of plurality of tanks provided.

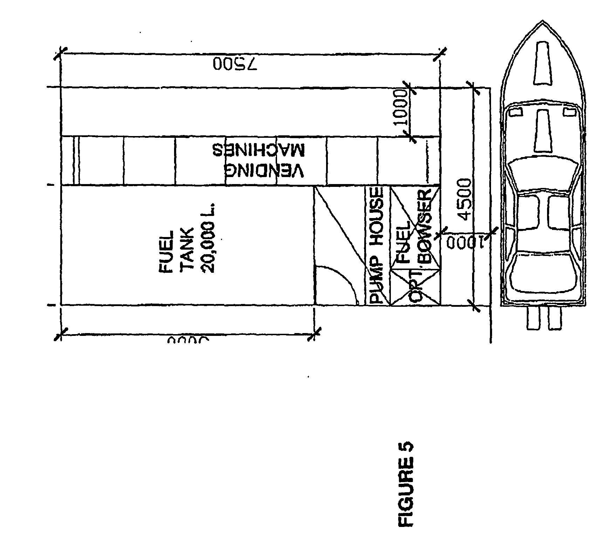

Referring to Figure 5, due to the above ground and removable structure the fuel dispensing means can be constructed on a barge or platform and provide dispensing of blended fuels directly to boats. In this tight environment the choice of required ratio of blended fuels is finally available, which has never been possible before. It should be noted that if access to a side of the construction is not possible then the fuel tanks can be vented sideways outwardly as well to the secured non accessible side.

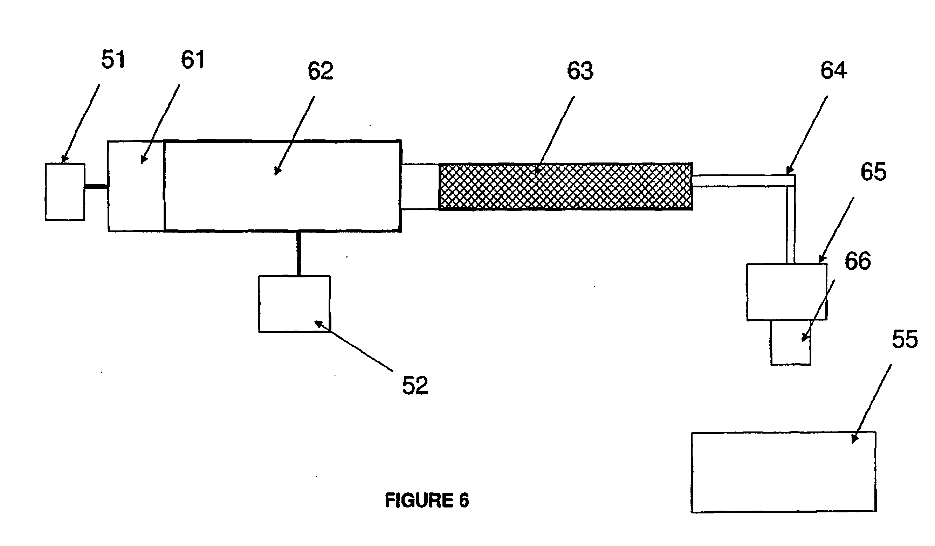

In Figure 6 there is shown the method of fuel dispensing including providing a metered mixture of two fuels. A metering means 51, 52 for metering two separate fuels for combination in a batch chamber 62 that is fed to a mixing chamber 63 by a piston pump 61. The mixing chamber 63 includes inline static mixer elements such that the positive displacement of fuel from the batch chamber 62 by means of the piston pump 61 for displacing the combined fuels to the dispensing means for substantially homogenising the combined fuels. The dispensing means includes dedicated line 64 from the mixing chamber to pump 65 connected to bowsers 66 for dispensing the homogenised combined fuels to a vehicle 55.

The dispensing means pump for pumping the homogenised combined fuels to a vehicle tank and the positive displacement pump coordinate so as to be able to dispense batch amounts from the batch chamber at the required mixture level.

The control of the dispensing can be provided by the dispensing means including an activation means at the nozzle that must engage the tank opening of the vehicle to begin dispensing.

In another improvement of the system a fuel tanker 51 can arrive at the dispensing station 11 and empty its partial load into a batch tank which is connected to a dispensing means that can receive fuels from any one of the plurality of tanks 21, 22, 23, 24 and provide the required mixture ratio of fuels back to the fuel tanker. For example the tanker might have a load of diesel at 100% but for delivery to next location requires a 80/20 ratio of diesel to biodiesel. Instead of returning to base the tanker can use the dispensing station to provide the required mixture with its own diesel by delivery to the batch tank and mixture through the dispensing means at the required ratio by inclusion of biodiesel from the biodiesel tank and return to the tanker. The need to not have to return to base but to have blended homogenised fuel at the required ratio is a significant advantage of the new system due to its novel construction and operation.

It should be understood that the above description is of a preferred embodiment and included as illustration only. 1t is not limiting of the invention. Clearly variations of the method of fuel dispensing and means therefore would be understood by a person skilled in the art without any inventiveness and such variations are included within the scope of this invention as defined in the following claims.

## Claims

1. A removable dispensing station (11) for dispensing multiple fuels including
a) a plurality of stand alone tanks (21, 22, 23, 24) each for containing a fuel;
b) a first protection means (25) surrounding each of the plurality of tanks (21, 22, 23, 24) wherein the first protection means (25) includes solid mass blocks;
c) a second protection means (26) for at least circumferentially surrounding the first protection means (25) and
d) a third protection means (27) for circumferentially surrounding the second protection means (26)
**characterised in that** the second protection means (26) is an assembly with detachably connecting parts that forms a frame structure for locating and supporting the first (25) and third (27) protection means to form a demountable and removable multiwall barrier for protecting the fuel tanks and safeguarding the users from accidental explosions.

2. A removable dispensing station (11) according to claim 1 wherein the plurality of tanks (21, 22, 23, 24) each for containing a fuel are connected to a fuel dispensing means (66) for dispensing a batch of fuel at a requested mixture of two or more fuels including providing a means for metered mixture of two or more fuels by metering separate fuels for combination in a mixing chamber (63) and for substantially homogenising the combined fuels, and a dispensing means for directly dispensing the batch of homogenised combined fuels at the requested mixture.

3. A removable dispensing station according to claim 2 wherein the mixing chamber (63) is a positive displacement means for displacing the combined fuels from a batch chamber, which provides the batch volume, through the mixing chamber to the dispensing means.

4. A removable dispensing station according to claim 3 wherein the mixing chamber (63) has a predetermined volume that is substantially equal to the expected maximum batch delivery in a single dispensing occurrence to a vehicle.

5. A removable dispensing station according to claim 2 or 3 wherein the mixing chamber (63) includes a flow means for causing homogenising of the combined fuels.

6. A removable dispensing station according to claim 5 wherein the flow means is static and relies on the effected flow caused by the positive displacement means (61) for displacing the combined fuels from a batch chamber (62) to the mixing chamber (63).

7. A removable dispensing station according to claim 6 wherein the dispensing means (66) includes a pump for pumping the homogenised combined fuels to a vehicle tank (55).

8. A removable dispensing station according to claim 7 wherein the pump of the dispensing means (66) coordinates with the positive displacement means (61) of the mixing chamber (63) to provide the dispensing.

9. A removable dispensing station according to claim 2 to 8 wherein the control of the dispensing is provided by the dispensing means (66) including an activation means at the nozzle that must engage the tank opening of the vehicle to begin dispensing.

10. A removable dispensing station according to claim 1 wherein the tanks (21, 22, 23, 24) are vented vertically.

11. A removable dispensing station according to claim 1 or 10 wherein the third protection means (27) form dual function such as vending machines.

12. A removable dispensing station according to any one of claims 1 to 11 wherein the operations are automatically controlled to allow for substantially unmanned operation.

13. A method of fuel dispensing including the steps of:
a) providing a removable structure including a first plurality of above ground standalone tanks that allows for storage of a first plurality of different fuels;
b) providing a multiwall barrier (25, 26, 27) for protecting the first plurality of above ground standalone tanks (21, 22, 23, 24) wherein at least one of the wall barriers of the multiwall barrier provides a dismountable supporting means for at least one other of the wall barriers and wherein at least one of the wall barriers includes solid mass blocks;
c) providing a fuel dispensing means (66) that dispenses a batch of at least two fuels blended on site and including metering means (51, 52) including batch receiving tank for metering two separate fuels for combination in a mixing chamber (63) which substantially homogenises the combined fuels and a dispensing means (66) for dispensing the substantially homogenised combined fuels wherein the plurality of fuels provided or mixtures provided is greater than the number of plurality of tanks provided.

14. A method of fuel dispensing according to claim 13 wherein at least one wall barrier of the multiwall barrier provides a dual function including the function of providing a barrier means.

15. A fuel dispensing system according to claim 10 including a batch receiving tank for receiving fuel from one or more of the fuel tanks or from an external source such as the vehicle or tanker requiring the batch of blended fuels.

## Patentansprüche

1. Ortsveränderbare Tankstation (11) zur Abgabe unterschiedlicher Kraftstoffe, umfassend
a) eine Vielzahl von eigenständigen Tanks (21, 22, 23, 24), jeder für das Speichern eines Kraftstoffs;
b) ein erstes, jeden der Vielzahl von eigenständigen Tanks (21, 22, 23, 24) umschließendes Schutzmittel (25), das Massivblöcke enthält;
c) ein zweites Schutzmittel (26) für die Umschließung des ersten Schutzmittels (25) zumindest am Umfang; und
d) ein drittes Schutzmittel (27) für die umlaufende Umschließung des zweiten Schutzmittels (26),
**gekennzeichnet dadurch, dass** das zweite Schutzmittel (26) eine Baugruppe mit lösbaren Verbindungselementen ist, die eine Rahmenstruktur für die Positionierung und Halterung des ersten (25) und des dritten Schutzmittels (27) bildet, so dass eine abbaubare und ortsveränderbare mehrwandige Barriere zum Schutz der Kraftstofftanks und der Benutzer gegen unfallverursachende Explosionen gebildet wird.

2. Ortsveränderbare Tankstation (11) gemäß Anspruch 1, wobei die Vielzahl von eigenständigen, jeweils für das Speichern eines Kraftstoffs vorgesehenen Tanks (21, 22, 23, 24) mit einem Kraftstoffabgabemittel (66) zur Abgabe einer Kraftstoffcharge aus einer Mischung zweier oder mehrerer Kraftstoffe mit gewünschten Mischungsanteilen verbunden sind, wobei ein Mittel für das dosierte Mischen zweier oder mehrerer Kraftstoffe durch Dosieren einzelner Kraftstoffe zur Vermischung in einer Mischkammer (63) und für weitestgehendes Homogenisieren der vermischten Kraftstoffe und ein Abgabemittel für die unmittelbare Abgabe der Charge homogenisierter, vermischter Kraftstoffe mit den gewünschten Mischungsanteilen vorgesehen sind.

3. Ortsveränderbare Tankstation (11) gemäß Anspruch 2, wobei die Mischkammer (63) ein Verdränger-Fördermittel zur Förderung der vermischten Kraftstoffe aus einer Chargenkammer, die das Chargenvolumen bereitstellt, durch die Mischkammer zum Abgabemittel ist.

4. Ortsveränderbare Tankstation (11) gemäß Anspruch 3, wobei die Mischkammer (63) ein festgelegtes Volumen hat, das im Wesentlichen gleich der erwarteten maximalen Chargengröße bei einem einzigen Abgabeereignis an ein Fahrzeug ist.

5. Ortsveränderbare Tankstation (11) gemäß Anspruch 2 oder 3, wobei die Mischkammer (63) ein strömungsbeeinflussendes Mittel zur Homogenisierung der vermischten Kraftstoffe einschließt.

6. Ortsveränderbare Tankstation (11) gemäß Anspruch 5, wobei das strömungsbeeinflussende Mittel feststehend ausgeführt ist und auf der Wirkung der Strömung beruht, wie sie durch das Verdränger-Fördermittel (61) zur Förderung der vermischten Kraftstoffe aus einer Chargenkammer (62) zur Mischkammer (63) erzeugt wird.

7. Ortsveränderbare Tankstation (11) gemäß Anspruch 6, wobei das Abgabemittel (66) eine Pumpe zur Förderung der homogenisierten, vermischten Kraftstoffe zu einem Fahrzeugtank (55) einschließt.

8. Ortsveränderbare Tankstation (11) gemäß Anspruch 7, wobei die Pumpe des Abgabemittels (66) mit dem Verdränger-Fördermittel (61) der Mischkammer (63) zur Herbeiführung der Abgabe zusammenwirkt.

9. Ortsveränderbare Tankstation (11) gemäß Anspruch 2 bis 8, wobei die Steuerung der Abgabe durch das Abgabemittel (66) bewirkt wird, wobei ein Betätigungsmittel an der Tankpistole bereitgestellt ist, das in die Tanköffnung des Fahrzeugs eingreifen muss, um die Abgabe zu beginnen.

10. Ortsveränderbare Tankstation (11) gemäß Anspruch 1, wobei die Tanks (21, 22, 23, 24) in vertikal entlüftet werden.

11. Ortsveränderbare Tankstation (11) gemäß Anspruch 1 oder 10, wobei die dritten Schutzmittel (27) eine zweite Funktion als Abgabegerät erfüllen.

12. Ortsveränderbare Tankstation (11) gemäß einem der Ansprüche 1 bis 11, wobei die Bedienungsvorgänge automatisch gesteuert werden, so dass ein im Wesentlichen unbemannter Betrieb ermöglicht wird.

13. Ein Verfahren der Kraftstoffabgabe, umfassend die Schritte:
a) Bereitstellen einer ortsveränderlichen Struktur, umfassend eine erste Vielzahl von oberirdisch angeordneten, eigenständigen Tanks, die die Speicherung einer ersten Vielzahl verschiedener Kraftstoffe ermöglicht;
b) Bereitstellen einer mehrwandigen Barriere (25, 26, 27) für den Schutz der ersten Vielzahl von oberirdisch angeordneten, eigenständigen Tanks (21, 22, 23, 24), wobei mindestens eine der Wandbarrieren der mehrwandigen Barriere ein abbaubares, halterndes Mittel für mindestens eine weitere der Wandbarrieren bereitstellt und wobei mindestens eine der Wandbarrieren Massivblöcke enthält;
c) Bereitstellen eines Kraftstoffabgabemittels (66), das eine Charge von mindestens zwei am Aufbauort gemischten Kraftstoffen abgibt und Dosiermittel (51, 52) umfasst, einschließend einen Chargenaufnahmetank für die Dosierung zweier einzelner Kraftstoffe zur Vermischung in einer Mischkammer (63), in der die vermischten Kraftstoffe weitestgehend homogenisiert werden, und ein Abgabemittel (66) für die Abgabe der weitestgehend homogenisierten vermischten Kraftstoffe, wobei die Vielzahl der bereitgestellten Kraftstoffe oder bereitgestellten Mischungen größer als die Anzahl der Vielzahl der bereitgestellten Tanks ist.

14. Ein Verfahren der Kraftstoffabgabe gemäß Anspruch 13, wobei mindestens eine Wandbarriere der mehrwandigen Barriere eine Doppelfunktion erfüllt, einschließend die Funktion, ein Barrieremittel zur Verfügung zu stellen.

15. Ein Verfahren der Kraftstoffabgabe gemäß Anspruch 10, enthaltend einen Chargenaufnahmetank zur Aufnahme von Kraftstoff aus einem oder mehreren der Kraftstofftanks oder aus einer externen Quelle wie zum Beispiel dem Fahrzeug oder Tanklastwagen, das/der die Charge gemischter Kraftstoffe benötigt.

## Revendications

1. Station de distribution déplaçable (11) destinée à distribuer de multiples carburants incluant
a) une pluralité de réservoirs autonomes (21, 22, 23, 24) chacun destiné à contenir un carburant ;
b) un premier moyen de protection (25) entourant chaque réservoir parmi la pluralité de réservoirs (21, 22, 23, 24), où le premier moyen de protection (25) inclut des blocs pleins ;
c) un deuxième moyen de protection (26) destiné à entourer au moins sur la circonférence le premier moyen de protection (25) et
d) un troisième moyen de protection (27) destiné à entourer sur la circonférence le deuxième moyen de protection (26)
**caractérisée en ce que** le deuxième moyen de protection (26) est un ensemble doté de parties de raccord de manière amovible qui forme une structure de cadre destinée à positionner et à supporter les premier (25) et troisième (27) moyens de protection afin de former une barrière à multiples parois démontable et déplaçable en vue de la protection des réservoirs de carburants et de la mise en sécurité des utilisateurs vis-à-vis d'explosions accidentelles.

2. Station de distribution déplaçable (11) selon la revendication 1, dans laquelle la pluralité de réservoirs (21, 22, 23, 24) chacun destiné à contenir un carburant sont reliés à un moyen de distribution de carburant (66) destiné à distribuer un lot de carburant selon un mélange requis de deux carburants ou plus incluant la fourniture d'un moyen pour un mélange dosé de deux carburants ou plus par dosage de carburants distincts en vue d'une combinaison dans une chambre de mélange (63) et en vue d'une homogénéisation de manière substantielle des carburants combinés, et un moyen de distribution destiné à distribuer de manière directe le lot de carburants combinés et homogénéisés selon le mélange requis.

3. Station de distribution déplaçable selon la revendication 2, dans laquelle la chambre de mélange (63) est un moyen de déplacement volumétrique destiné à déplacer les carburants combinés depuis une chambre de lot, qui fournit le volume de lot, par l'intermédiaire de la chambre de mélange jusqu'au moyen de distribution.

4. Station de distribution déplaçable selon la revendication 3, dans laquelle la chambre de mélange (63) présente un volume prédéterminé qui est sensiblement égal à la délivrance de lot maximale attendue en une seule occurrence de distribution à un véhicule.

5. Station de distribution déplaçable selon la revendication 2 ou 3, dans laquelle la chambre de mélange (63) inclut un moyen pour l'écoulement destiné à provoquer l'homogénéisation des carburants combinés.

6. Station de distribution déplaçable selon la revendication 5, dans laquelle le moyen pour l'écoulement est statique et repose sur l'écoulement généré provoqué par le moyen de déplacement volumétrique (61) destiné à déplacer les carburants combinés depuis une chambre de lot (62) jusqu'à la chambre de mélange (63).

7. Station de distribution déplaçable selon la revendication 6, dans laquelle le moyen de distribution (66) inclut une pompe destinée à pomper les carburants combinés et homogénéisés jusqu'à un réservoir de véhicule (55).

8. Station de distribution déplaçable selon la revendication 7, dans laquelle la pompe du moyen de distribution (66) fonctionne en coordination avec le moyen de déplacement volumétrique (61) de la chambre de mélange (63) pour fournir la distribution.

9. Station de distribution déplaçable selon les revendications 2 à 8, dans laquelle la commande de la distribution est fournie par le moyen de distribution (66) incluant un moyen d'activation au niveau de la buse qui doit s'engager sur l'ouverture de réservoir du véhicule pour commencer une distribution.

10. Station de distribution déplaçable selon la revendication 1, dans laquelle les réservoirs (21, 22, 23, 24) sont mis à l'évent de manière verticale.

11. Station de distribution déplaçable selon la revendication 1 ou 10, dans laquelle le troisième moyen de protection (27) forme une fonction double comme des distributeurs automatiques.

12. Station de distribution déplaçable selon l'une quelconque des revendications 1 à 11, dans laquelle les opérations sont automatiquement commandées pour permettre une opération sensiblement sans personnel.

13. Procédé de distribution de carburant incluant les étapes :
a) de fourniture d'une structure déplaçable incluant une première pluralité de réservoirs autonomes à ciel ouvert qui permet un stockage d'une première pluralité de différents carburants ;
b) une fourniture d'une barrière à multiples parois (25, 26, 27) destinée à protéger la première pluralité de réservoirs autonomes à ciel ouvert (21, 22, 23, 24), où au moins l'une des parois-barrières de la barrière à multiples parois fournit un moyen de support démontable destiné à au moins une autre paroi parmi les parois-barrières et où au moins une paroi parmi les parois-barrières inclut des blocs pleins ;
c) de fourniture d'un moyen de distribution de carburant (66) qui distribue un lot d'au moins deux carburants mélangés sur site et incluant un moyen de dosage (51, 52) incluant un réservoir de réception de lot destiné à doser deux carburants distincts pour une combinaison dans une chambre de mélange (63) qui homogénéise sensiblement les carburants combinés et un moyen de distribution (66) destiné à distribuer les carburants combinés sensiblement homogénéisés où la pluralité de carburants fournis ou de mélanges fournis est supérieure au nombre de pluralité de réservoirs fournis.

14. Procédé de distribution de carburant selon la revendication 13, dans lequel au moins une paroi-barrière de la barrière à multiples parois fournit une fonction double incluant la fonction de fourniture d'un moyen de barrière.

15. Système de distribution de carburant selon la revendication 10, incluant un réservoir de réception de lot destiné à recevoir un carburant depuis un ou plusieurs réservoirs de carburants ou depuis une source externe telle que le véhicule ou un camion-citerne requérant le lot de carburants mélangés.
